# EUROPÄISCHE PATENTSCHRIFT

(11) **EP 1 496 214 B1**
(45) Veröffentlichungstag und Bekanntmachung des Hinweises auf die Patenterteilung: **05.09.2018**
(21) Anmeldenummer: 04103246.7
(22) Anmeldetag: 08.07.2004
(51) Int. Cl.: F01P 3/18, B60K 11/04

(54) **Geländegängiges Fahrzeug**
Off-road Vehicle
Véhicule tous terrains

(30) Priorität: 11.07.2003 US 617612
(43) Veröffentlichungstag der Anmeldung: 12.01.2005
(73) Patentinhaber: Deere & Company, Moline, IL 61265 (US)
(72) Erfinder: Vuk, Carl Thomas, 50622, Denver (US)
(74) Vertreter: Holst, Sönke

(56) Entgegenhaltungen:
- EP-A- 0 952 024
- GB-A- 1 380 874
- US-A- 4 696 361
- US-A1- 2003 015 361
- PATENT ABSTRACTS OF JAPAN Bd. 0081, Nr. 36 (M-304), 23. Juni 1984 (1984-06-23) -& JP 59 034929 A (YANMAR DIESEL KK), 25. Februar 1984 (1984-02-25)

## Beschreibung

Die Erfindung betrifft ein geländegängiges Fahrzeug, insbesondere einen Ackerschlepper, mit einem Verbrennungsmotor mit einer zumindest im Wesentlichen horizontal ausgerichteten Rotationsachse, einer Haube, die zumindest den Verbrennungsmotor im Wesentlichen umschließt, und mit wenigstens einer ersten Kühleinrichtung, vorzugsweise zur Kühlung des Verbrennungsmotors, mit zumindest einem ersten Wärmetauscher, der wenigstens bereichsweise oberhalb des Verbrennungsmotors und unterhalb der Haube angeordnet ist, und wenigstens einem Gebläse, das im Kühlbetrieb einen zumindest im Wesentlichen aufwärts gerichteten Luftstrom durch den Wärmetauscher erzeugt.

Bekannte geländegängige Fahrzeuge weisen Kühlsysteme mit einem Gebläse und einer Kühlwasserpumpe auf, welche von einem Verbrennungsmotor mechanisch angetrieben werden. Der mechanische Antrieb begrenzt die Möglichkeiten der Anordnung derartiger Bauteile derart, dass sie üblicherweise in der Nähe einer Rotationsachse des Verbrennungsmotors in einem Frontbereich des Verbrennungsmotors angeordnet sind. Durch den Antrieb des Gebläses wird eine große Menge an Leistung verbraucht. Dadurch wird das Fahrzeugverhalten allgemein verschlechtert und der Kraftstoffverbrauch wie auch das Geräuschniveau des Fahrzeugs erhöht. Derartige Fahrzeugkühlsysteme benötigen darüber hinaus einen großen Bauraum in Bereichen, die für die Sicht einer Bedienungsperson relevant sein können. Es kann weiter vorkommen, dass erhitzte Luft zurück zu einer Kabine geblasen wird, wodurch die Kabine sich wesentlich aufheizt und wodurch wiederum die Belastung bzw. der Leistungsverbrauch einer Kabinenklimaanlage erhöht wird. Unter bestimmten Bedingungen, wie beispielsweise bei Rückenwind, kann es vorkommen, dass die heiße Luft durch das Kühlsystem wieder eingesaugt und rezirkuliert bzw. erneut an einem Wärmetauscher vorbeigeführt wird. Die Leistung bekannter Kühlsysteme wird daher meist entsprechend größer ausgelegt, um mit derartigen Auswirkungen fertig werden zu können.

Die US-A-5,678,648 zeigt ein geländegängiges Fahrzeug mit einem vertikal angeordneten Verbrennungsmotor, welcher in einem durch eine Haube abgedeckten Motorraum angeordnet ist. Das Fahrzeug weist ein Gebläse auf, welches oberhalb des Verbrennungsmotors und unterhalb eines Wärmetauschers angeordnet ist. Das Gebläse saugt Luft zur Kühlung in aufwändiger Art und Weise aus einem rückwärtigen, im Bereich einer Bedienerplattform gelegenen Bereich unter der Haube von oberhalb des Verbrennungsmotors an und gibt die erhitzte Luft in einem Frontbereich des Fahrzeugs wieder an die Umgebung ab.

Die gattungsgemäße US-A-4,696,361 zeigt ein Kühlsystem für einen Kompaktlader mit einem schwenkbaren Wärmetauscher und einem Ölkühlerzusammenbau mit einem Paar von Wärmetauschern, welche in eine angehobenen und eine abgesenkte Stellung verschwenkt werden könne, um den Motor und weitere Bauteile zugänglich zu machen.

Die US 2003/0015361 A1 zeigt einen Aufsitzmähter mit einem hinter einen Führerstand angeordneten Motor und einer oberhalb des Motors angeordneten Kühlereinrichtung mit einem Gebläse, das an einer Unterseite eines Kühlers angeordnet ist. Ein Kühlsystem für ein geländegängiges Fahrzeug zeigt auch die JP59034929 Das der Erfindung zugrunde liegende Problem wird darin gesehen, dass Fahrzeuge mit bekannten Kühleinrichtungen nicht optimal arbeiten.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Es wird ein geländegängiges Fahrzeug mit einem Verbrennungsmotor mit einer zumindest im Wesentlichen horizontal ausgerichteten Rotationsachse, einer Haube, die zumindest den Verbrennungsmotor im Wesentlichen umschließt, und mit einer Kühleinrichtung mit zumindest einem ersten Wärmetauscher, der wenigstens bereichsweise oberhalb des Verbrennungsmotors und unterhalb der Haube angeordnet ist, vorgeschlagen. Das Fahrzeug weist wenigstens ein Gebläse, welches einen Luftstrom durch den Wärmetauscher erzeugen kann, auf, wobei das Gebläse im Kühlbetrieb einen zumindest im Wesentlichen aufwärts gerichteten Luftstrom erzeugt, wodurch eine Rezirkulation heißer Luft durch die Kühleinrichtung vermieden werden kann. Bei dem Fahrzeug kann es sich um ein landwirtschaftliches Fahrzeug, beispielsweise in der Art eines Ackerschleppers, eines Teleskopladers oder einer Erntemaschine, beispielsweise einem Mähdrescher oder einem Feldhäcksler, oder um jede andere insbesondere selbstfahrende landwirtschaftliche Maschine handeln. Darüber hinaus kann das Fahrzeug in der Art eines forstwirtschaftlichen oder industriellen Fahrzeugs oder auch eines Baufahrzeugs, wie beispielsweise einer Planierraupe,
auch eines Baufahrzeugs, wie beispielsweise einer Planierraupe, einem Bagger etc. und allgemein als jedes geeignete geländegängige Fahrzeug, auch in der Art eines Fahrzeugs zur Rasen-, Garten- bzw. Grundstückspflege, beispielsweise einem Rasentraktor oder einem Aufsitzmäher etc., ausgebildet sein.

Weist das Fahrzeug eine weitere Kühleinrichtung auf, so kann durch diese ein weiterer Bauteil oder eine weitere Baugruppe gekühlt werden. Es können auch zwei oder mehrere weitere Kühleinrichtungen vorgesehen sein. Insbesondere ist die erste Kühleinrichtung zur Kühlung des Verbrennungsmotors und die zweite Kühleinrichtung zur Kühlung der Ladeluft vorgesehen. Die zweite Kühleinrichtung kann beispielsweise auch einen Einlasskrümmer kühlen oder sie kann einen Bestandteil einer Klimaanlage bilden. Derartige Kühleinrichtungen können aber auch die zweite oder auch die erste Kühleinrichtung als solche bilden.

Es ist möglich, die erhitzte Luft bzw. den von dem Gebläse erzeugten Luftstrom nach einem Durchströmen des bzw. der Wärmetauscher(s) in Seitenbereichen und/oder in einem Frontbereich der Haube aus dieser auszuleiten. Wird der Luftstrom bzw. die erwärmte Luft aber in einem oberen Bereich der Haube, insbesondere durch Öffnungen bzw. Aussparungen in dieser ausgelassen, so ergibt sich ein besonders unbehinderter Luftstrom von dem Gebläse nach außen, wodurch einer Erwärmung weiterer Bauteile, insbesondere der Haube, bzw. einem Aufstauen von Wärme unterhalb der Haube bzw. in einem Motorraum entgegengewirkt wird. Darüber hinaus wird die erhitzte Luft in einem Bereich abgeben, in dem sie nicht oder nur in geringem Maße mit Menschen, Tieren oder Einrichtungen in der Umgebung des Fahrzeugs in Berührung kommt.

Das Gebläse oder jedes bzw. eines der Gebläse kann jeweils einen einzelnen Lüfter aufweisen bzw. als ein solcher ausgebildet sein. Weist aber eines, mehrere oder alle Gebläse zwei oder mehrere Lüfter auf, so kann jeder dieser Lüfter kleiner ausgebildet sein, wodurch ein geringerer Bauraum genutzt wird und die Lüfter flexibler eingesetzt werden können bzw. eine den Anforderungen angepasste, verbesserte Steuerung/Regelung aller Lüfter oder einzelner Lüfter möglich ist.

Eine kompakte Bauform ergibt sich, wenn das/die Gebläse bzw. der/die Lüfter zumindest bereichsweise und insbesondere im Wesentlichen zwischen dem Verbrennungsmotor und dem Wärmetauscher angeordnet sind. Auf diese Weise ist auch eine zusätzliche Kühlung des Verbrennungsmotors durch die durch das/die Gebläse bzw. den/die Lüfter angesaugte Luft möglich. Eine Anordnung unterhalb der Wärmtauscher weist aber den Vorteil auf, dass das/die Gebläse bzw. der/die Lüfter in kühlerer Luft betrieben werden kann/können.

Es ist denkbar, das/die Gebläse bzw. den/die Lüfter mechanisch oder in anderer Art und Weise anzutreiben. Werden dieser/diese/dieses elektrisch angetrieben, so kann ihr Einbauort unabhängig von Getrieben etc. gewählt werden. Darüber hinaus können Elektromotoren besonders einfach gesteuert bzw. geregelt werden, erzeugen nur ein geringes Maß an Geräusch, benötigen nur einen geringen Bauraum und sind kostengünstig.

Diese Elektromotoren bzw. das/die Gebläse oder der/die Lüfter können durch Batterien bzw. Akkumulatoren mit elektrischer Energie versorgt werden. Besonders günstig ist es aber, wenn der Verbrennungsmotor einen Generator zur Erzeugung elektrischer Energie antreibt, um diese zu versorgen. Dieser Generator kann derart ausgebildet sein, dass er nur das/die Gebläse, den/die Lüfter bzw. den/die zugeordneten Elektromotor(en) mit Energie versorgt. Vorzugsweise liefert der Generator aber Energie an weitere Verbraucher bzw. stellt Energie zur Verfügung, die durch von dem Fahrzeug unabhängige Verbraucher genutzt werden oder die an dem Fahrzeug oder von diesem unabhängig vorgesehene Akkumulatoren aufladen kann. Das Fahrzeug weist eine Kabine auf, so ist es vorteilhaft, wenn der Luftstrom, insbesondere der austretende Luftstrom von der Kabine weg gerichtet ist, so dass diese durch die erwärmte bzw. heiße Luft nicht aufgeheizt wird. Der Luftstrom kann derart durch das/die Gebläse bzw. den/die Lüfter ausgerichtet werden. Es können aber auch Leiteinrichtungen etc. beispielsweise unterhalb der Haube, im Bereich der Öffnungen, durch die die Luft austritt, etc. vorgesehen sein, um den Luftstrom zu leiten. Derartige Leiteinrichtungen können auch zusätzlich vorgesehen sein.

In der Zeichnung ist ein nachfolgend näher beschriebenes Ausführungsbeispiel der Erfindung dargestellt. Es zeigt:
- Fig. 1: eine vereinfachte, schematische Darstellung eines Fahrzeugs mit einem Kühlsystem gemäß der vorliegenden Erfindung,
- Fig. 2: eine perspektivische Ansicht eines Frontbereichs eines derartigen Fahrzeugs,
- Fig. 3: eine perspektivische Ansicht eines Kühlsystems gemäß Figur 1, wobei eine Haube des Fahrzeugs entfernt wurde,
- Fig. 4: eine linke Seitenansicht gemäß Figur 3,
- Fig. 5: eine rechte Seitenansicht gemäß Figur 3 und
- Fig. 6: ein vereinfachtes elektrisches Schaltbild des Kühlsystems.

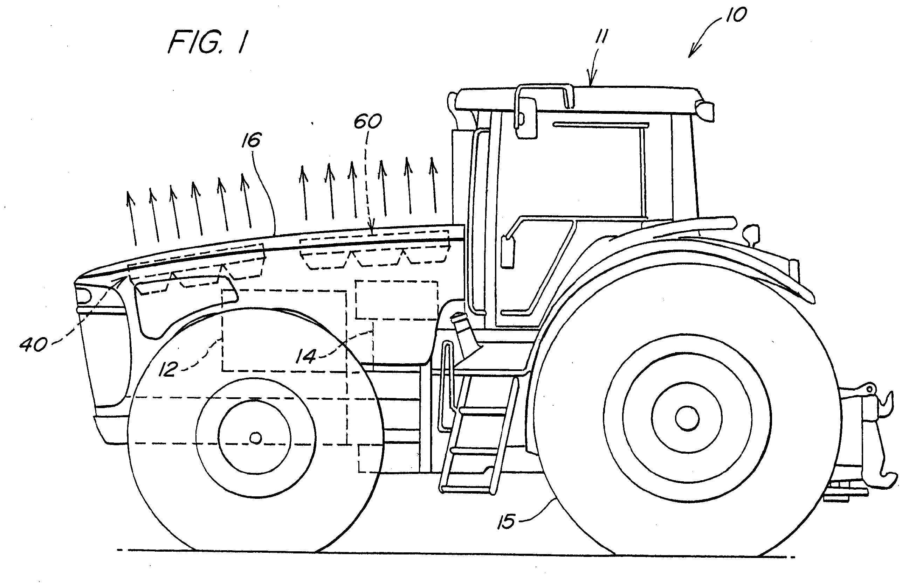

Es wird zuerst auf Figur 1 Bezug genommen, in der ein lenkbares, nicht auf Schienen laufendes, geländegängiges Fahrzeug 10 (beispielsweise ein landwirtschaftlicher Ackerschlepper) gezeigt wird, welcher eine Kabine 11, einen Verbrennungsmotor 12, ein Getriebe 14 zum mechanischen Antrieb von Rädern 15, und eine Haube 16 aufweist. Unter der Haube 16 und oberhalb des Verbrennungsmotors 12 ist eine Motorkühleinrichtung bzw. eine erste Kühleinrichtung 40 und eine Ladelüftkühleinrichtung bzw. eine zweite Kühleinrichtung 60 angeordnet.

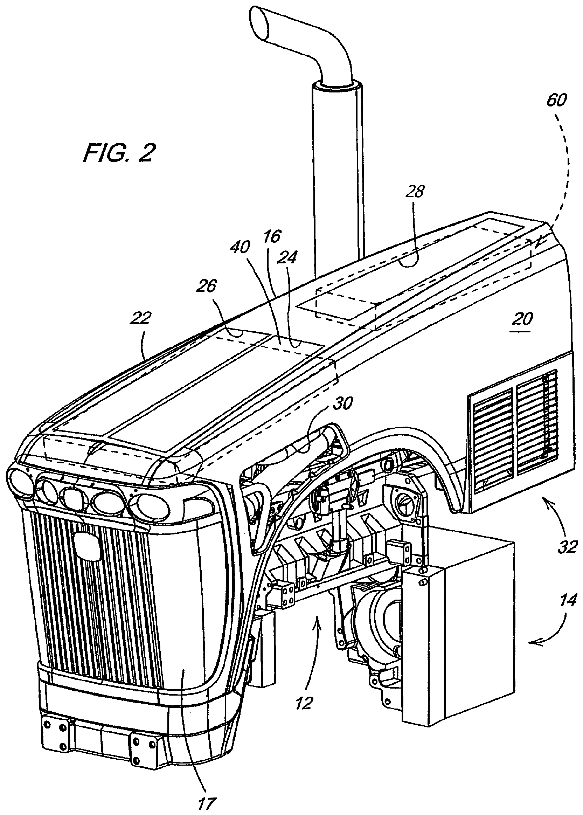

Gemäß Figur 2 ist in einem Frontbereich der Haube 16 ein Frontgrill 17 vorgesehen. Die Haube 16 weist eine obere Abdeckung 18 und linke und rechte Seitenwände 20, 22 (von denen im Wesentlichen nur eine Seitenwand 20 in Figur 2 sichtbar ist) auf. Die Abdeckung 18 weist ein Paar von vorderen Öffnungen 24, 26 und eine rückwärtige Öffnung 28 auf. Die Seitenwand 20 weist eine vordere Einlassöffnung 30, eine rückwärtige Einlassöffnung 32 und eine Rad- bzw. Achs-Aussparung 34 auf. Der Verbrennungsmotor 12 weist einen Turbolader 33 auf, welcher über einen Luftfilter 35 mit Einlassluft versorgt wird.

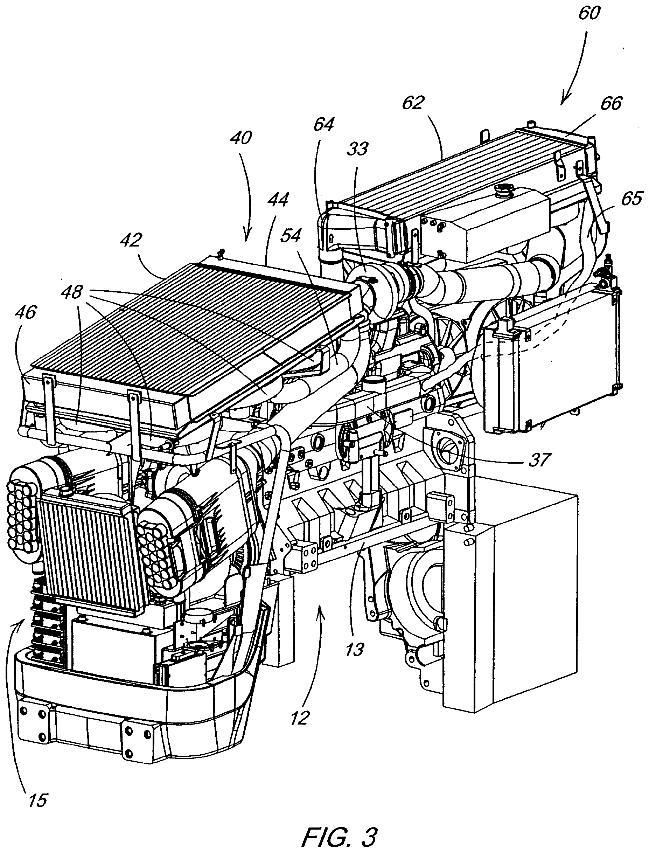

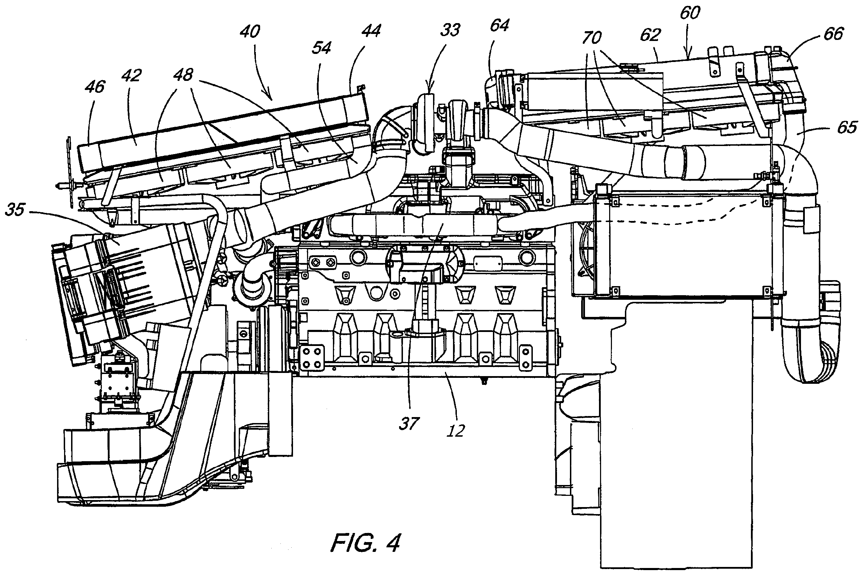

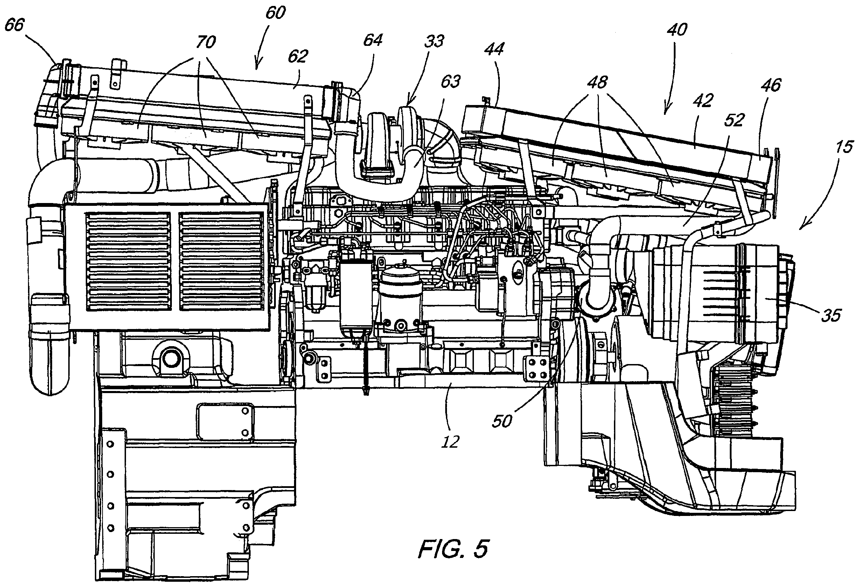

Wie es am Besten in den Figuren 3, 4 und 5 gesehen werden kann, umfasst der Verbrennungsmotor 12 eine Brennkraftmaschine 12A und Zusatzaggregate 12B. Der Wärmetauscher 40 ist oberhalb des Verbrennungsmotors 12 angeordnet. Die Motorkühleinrichtung 40 weist zwischen einem oberen Reservoir 44 und einem unteren Reservoir 46 eine erste Wärmetauschereinheit 42 auf. Eine Mehrzahl (wie beispielsweise sechs) elektrische angetriebene Lüfter 48 sind an einer Unterseite der Kühleinrichtung 40 zumindest im Wesentlichen zwischen dem Verbrennungsmotor 12 und der Kühleinrichtung 40 vorgesehen. Die Lüfter 48 werden vorzugsweise derart angetrieben, dass sie Luft im Wesentlichen nach oben und leicht nach vorn (weg von der Kabine 11) durch die Kühleinrichtung 40 blasen. Elektrisch angetriebene Wasserpumpen 50 lassen konventionelles Kühlmittel durch den Verbrennungsmotor 12 und die Kühleinrichtung 40 zirkulieren und empfangen gekühltes Kühlmittel über einen Schlauch bzw. eine Leitung 53 von dem Tank 46. Ein Schlauch bzw. eine Leitung 54 leitet erhitztes Kühlmittel vom dem Verbrennungsmotor 12 zu dem oberen Tank 44.

Die Ladelüftkühlung bzw. die zweite Kühleinrichtung 60 ist ebenfalls im Wesentlichen oberhalb des Verbrennungsmotors 12 und hinter der Motorkühleinrichtung 60 angeordnet. Die zweite Kühleinrichtung 60 weist zwischen einer unteren Kammer 64 und einer oberen Kammer 66 einen Wärmetauscher 62 auf. Ein Ansaugrohr 63 leitet Einlassluft von dem Turbolader 33 zu der Kammer 64. Ein Auslassrohr 65 leitet gekühlte Luft von der Kammer 66 zu einem Motoreinlasskrümmer 37. Eine Mehrzahl (wie beispielsweise sechs) elektrisch angetriebener Lüfter 70 sind an der Unterseite der zweiten Kühleinrichtung 60 im Wesentlichen zwischen dem Verbrennungsmotor 12 und der zweiten Kühleinrichtung 60 vorgesehen. Die Lüfter 70 werden vorzugsweise angetrieben, um Luft im Wesentlichen nach oben und leicht nach vorn (weg von der Kabine 11) durch die zweite Kühleinrichtung 60 zu blasen. Es ist vorteilhaft, wenn die Lüfter 48, 70 unterhalb statt oberhalb der entsprechenden Wärmetauscher 42 oder 62 angeordnet sind, so dass sie in kühlerer, dichterer Luft betrieben werden.

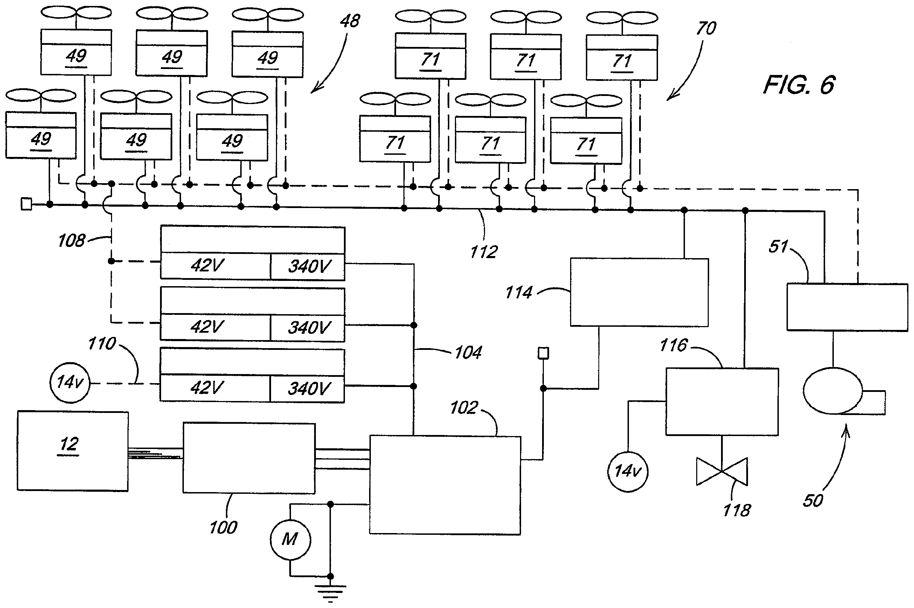

Gemäß Figur 6 liefert ein motorgetriebener Generator 100 elektrische Energie an einen Umsetzer 102, welcher 340 Volt Wechselspannung an eine 340 Volt Sammelleitung 104 liefert. Spannungswandler 106 empfangen die 340 V Wechselspannung und liefern 42 Volt Wechselspannung an eine 42 Volt Sammelleitung 108 und 14 Volt an eine 14 Volt Sammelleitung 110. Jeder Lüfter 48, 70 weist eine(n) entsprechenden Motor/Steuerung 49, 71 auf, welche (r) Energie von der Sammelleitung 108 empfängt. Jede(r) Motor/Steuerung 49, 71 empfängt auch Steuersignale über einen konventionellen CAN Bus 112. Der CAN Bus 112 empfängt Steuersignale von einer Motorsteuereinheit 114. Die Kühlmittelpumpe 50 weist eine(n) Motor/Steuerung 51 auf, welche mit der Sammelleitung 108 und dem CAN Bus 112 verbunden ist. Eine Temperatursteuer- bzw. -regeleinheit 116 ist mit dem CAN Bus 112 und einem Motorthermostaten 118 verbunden. Die Motorsteuereinheit 114 kann derart programmiert sein, dass sie eine Anzahl von in Betrieb befindlichen Lüftern 48, 70 steuert bzw. regelt, und um die Geschwindigkeit der Lüfter 48, 70 und die Geschwindigkeit der Kühlmittelpumpe 50 in Abhängigkeit von ermittelten Bedingungen und Betriebskenngrößen zu steuern bzw. zu regeln.

Das Ergebnis stellt ein Kühlsystem mit einer Mehrzahl unabhängiger, elektrisch angetriebener Lüfter 48, 70 dar, welche mit Wärmetauschern 42, 62 entsprechend zusammengefasst sind, welche horizontal oberhalb des Verbrennungsmotors 12 angeordnet sind. Die Lüfter 48 und 70 blasen Luft in vertikaler Richtung durch große Aussparungen bzw. Öffnungen 24, 26 und 28 in einem oberen Bereich der Haube 16. Die Lüfter 48, 70 und Wärmetauscher 42, 62 sind entlang der Längserstreckung der Haube 16 vorgesehen. Die erste Kühleinrichtung 40 ist vorzugsweise direkt oberhalb und an dem Verbrennungsmotor 12 anliegend vorgesehen. An den Turbolader 33 angrenzend kann ein Ladeluftkühler oder eine Abgasrückführungskühlung (nicht gezeigt) vorgesehen sein, um Strömungsverluste zu verringern. Klimaanlagenkühleinrichtungen und Getriebekühleinrichtungen (nicht gezeigt) mit geringerer Leistung können dicht an der Kabine 11 und dem Getriebe 14 angeordnet sein.

Dieses System verringert die Größe des vorderen Endbereichs des Fahrzeugs und verbessert die Sicht nach vorn, da dort kein großes, zentral in einem Frontbereich angeordnetes Lüfter-Wärmetauschersystem angeordnet ist. Die Mehrzahl kleiner steuerbarer, elektromotorisch angetriebener Lüfter 48, 70 kann gesteuert werden, um nur den für eine optimale Kühlung benötigten Luftstrom zu liefern, wodurch die Effizienz gegenüber konventionellen Fahrzeugkühlsystemen erhöht wird. Die Schläuche bzw. Leitungen und Anschlüsse an die Wärmetauscher 42, 62 sind kurz und einfach, da die Wärmetauscher 42, 62 dichter an dem Motorkomponenten angeordnet sind, mit denen sie verbunden werden müssen.

Die aufsteigende, erhitzte Kühlluft wird sich naturgemäß wie Luft in einem Kamin erheben und dies wird die Leistung verringern, welche die Lüfter 48, 70 aufnehmen werden. Indem die Hitze vertikal ausgelassen wird, wird eine luftzuginduzierte Rezirkulation und eine unbeabsichtigte Aufheizung der Kabine vollständig eliminiert werden. Eine Mehrzahl von Lüftern 48, 70 ist leiser und stellt einen gleichmäßigeren Luftstrom durch die Wärmetauscher 42, 62 zur Verfügung, der in einer besseren Kernnutzung resultiert. Durch das Auslassen der erhitzten Kühlluft in einem oberen Bereich der Haube 16 sind mehr Öffnungen bzw. Aussparungen in der Haube vorhanden, welche es der Luft erlauben einzutreten, wodurch die Luftgeschwindigkeit und ein Einschleppen von Verschmutzungen reduziert wird. Vorzugsweise können die Lüfter 48, 70 zum Zweck der Selbstreinigung umgekehrt werden, um mit der Schwerkraft zusammenzuarbeiten, um Verschmutzungen, welche sich an der Unterseite der Wärmtauscher 42, 62 festgesetzt haben, zu entfernen. Der Verbrennungsmotor 12 kann auch dadurch eine zusätzliche Kühlung erfahren, dass kalte Luft in den Motorraum eintritt, bevor sie durch die Motorkühleinrichtung 40 gelangt. Es können Abweiser und Öffnungen (nicht gezeigt) in der Haube 16 vorgesehen oder in diese eingeformt sein und verwendet werden, um den Kühleffekt gemäß dem Bedarf zu steuern.

Während die vorliegende Erfindung in Verbindung mit einer speziellen Ausführungsform dargestellt wurde, soll es klar sein, dass viele Alternativen, Modifikationen und Variationen für den Fachmann im Licht der vorstehenden Beschreibung offensichtlich sein werden. Beispielsweise kann diese Erfindung an Mähdreschern, Feldhäckslern und manchen Baumaschinen eingesetzt werden. Entsprechend ist es beabsichtigt, dass die Erfindung alle solchen Alternativen, Modifikationen und Veränderungen erfasst, welche in den Schutzbereich der folgenden Ansprüche fallen.

## Patentansprüche

1. Geländegängiges Fahrzeug (10), insbesondere Ackerschlepper, mit einem Verbrennungsmotor (12) mit einer zumindest im Wesentlichen horizontal ausgerichteten Rotationsachse, einer Haube (16), die zumindest den Verbrennungsmotor (12) im Wesentlichen umschließt, und mit zumindest einer ersten Kühleinrichtung (40, 60), vorzugsweise zur Kühlung des Verbrennungsmotors (12), mit zumindest einem ersten Wärmetauscher (42, 62), der wenigstens bereichsweise oberhalb des Verbrennungsmotors (12) und unterhalb der Haube (16) angeordnet ist, und wenigstens einem Gebläse, das im Kühlbetrieb einen zumindest im Wesentlichen aufwärts gerichteten Luftstrom durch den Wärmetauscher (42, 62) erzeugt, wobei das Gebläse zumindest bereichsweise bzw. im Wesentlichen zwischen dem Verbrennungsmotor (12) und dem Wärmetauscher (42, 62) angeordnet ist, **dadurch gekennzeichnet, dass** das Fahrzeug eine Kabine aufweist und die Haube (16) vor der Kabine (11) angeordnet ist

2. Fahrzeug nach Anspruch 1, **gekennzeichnet durch** wenigstens eine zweite Kühleinrichtung (40, 60), vorzugsweise zur Kühlung der Ladeluft, mit zumindest einem weiteren Wärmetauscher (42, 62) der wenigstens bereichsweise oberhalb des Verbrennungsmotors (12) und unterhalb der Haube (16) angeordnet ist, und einem Gebläse, welches im Kühlbetrieb einen zumindest im Wesentlichen aufwärts gerichteten Luftstrom durch den weiteren Wärmetauscher (42, 62) erzeugt.

3. Fahrzeug nach Anspruch 1 oder 2, **dadurch gekennzeichnet, dass** die Haube (16) insbesondere in einem oberen Bereich Öffnungen (24, 26, 28) aufweist, durch welche der von dem Gebläse erzeugte Luftstrom nach einem Durchströmen des/der Wärmetauscher(s) (42, 62) austreten kann.

4. Fahrzeug nach einem oder mehreren der vorherigen Ansprüche, **dadurch gekennzeichnet, dass** das/die Gebläse jeweils wenigstens einen Lüfter (48, 70) aufweist/aufweisen, und/oder dass eines der Gebläse oder die Gebläse jeweils mehrere Lüfter (48, 70) aufweisen.

5. Fahrzeug nach einem oder mehreren der vorherigen Ansprüche, **dadurch gekennzeichnet, dass** das/die Gebläse bzw. die Lüfter (48, 70) elektrisch antreibbar sind.

6. Fahrzeug nach einem oder mehreren der vorherigen Ansprüche, **dadurch gekennzeichnet, dass** der Verbrennungsmotor (12) einen Generator (100) zur Erzeugung elektrischer Energie antreiben kann.

7. Fahrzeug nach einem oder mehreren der vorherigen Ansprüche, **dadurch gekennzeichnet, dass** der austretende Luftstrom zumindest im Wesentlichen von der Kabine (11) weg gerichtet ist.

## Claims

1. Off-road vehicle (10), in particular tractor, with an internal combustion engine (12) having an at least substantially horizontally oriented axis of rotation, a cover (16) which substantially surrounds at least the internal combustion engine (12), and with at least one first cooling device (40, 60), preferably for cooling the internal combustion engine (12), with at least one first heat exchanger (42, 62) which is arranged at least in regions above the internal combustion engine (12) and below the cover (16), and at least one fan which, in the cooling mode, generates an at least substantially upwardly directed airflow through the heat exchanger (42, 62), wherein the fan is arranged at least in regions or substantially between the internal combustion engine (12) and the heat exchanger (42, 62), **characterized in that** the vehicle has a cab and the cover (16) is arranged in front of the cab (11).

2. Vehicle according to Claim 1, **characterized by** at least one second cooling device (40, 60), preferably for cooling the charge air, with at least one further heat exchanger (42, 62) which is arranged at least in regions above the internal combustion engine (12) and below the cover (16), and a fan which, in the cooling mode, generates an at least substantially upwardly directed airflow through the further heat exchanger (42, 62).

3. Vehicle according to Claim 1 or 2, **characterized in that** the cover (16), in particular in an upper region, has openings (24, 26, 28) through which the airflow generated by the fan can emerge after flowing through the heat exchanger(s) (42, 62).

4. Vehicle according to one or more of the preceding claims, **characterized in that** the fan(s) each has/have at least one ventilator (48, 70), and/or **in that** one of the fans or the fans each has/have a plurality of ventilators (48, 70).

5. Vehicle according to one or more of the preceding claims, **characterized in that** the fan(s) or the ventilators (48, 70) are electrically drivable.

6. Vehicle according to one or more of the preceding claims, **characterized in that** the internal combustion engine (12) can drive a generator (100) for generating electrical energy.

7. Vehicle according to one or more of the preceding claims, **characterized in that** the emerging airflow is at least substantially directed away from the cab (11).

## Revendications

1. Véhicule tout-terrain (10), en particulier tracteur agricole, comprenant un moteur à combustion interne (12) avec un axe de rotation orienté au moins essentiellement horizontalement, un capot (16), qui entoure au moins sensiblement au moins le moteur à combustion interne (12), et avec au moins un premier dispositif de refroidissement (40, 60), de préférence pour refroidir le moteur à combustion interne (12), avec au moins un premier échangeur de chaleur (42, 62), qui est disposé au moins en partie au-dessus du moteur à combustion interne (12) et en dessous du capot (16), et au moins une soufflante qui, pendant le fonctionnement de refroidissement, génère un flux d'air orienté au moins essentiellement vers le haut à travers l'échangeur de chaleur (42, 62), la soufflante étant disposée au moins en partie ou essentiellement entre le moteur à combustion interne (12) et l'échangeur de chaleur (42, 62), **caractérisé en ce que** le véhicule présente une cabine et le capot (16) est disposé devant la cabine (11).

2. Véhicule selon la revendication 1, **caractérisé par** au moins un deuxième dispositif de refroidissement (40, 60), de préférence pour refroidir l'air de suralimentation, comprenant au moins un échangeur de chaleur supplémentaire (42, 62) qui est disposé au moins en partie au-dessus du moteur à combustion interne (12) et en dessous du capot (16), et une soufflante qui, pendant le fonctionnement de refroidissement, génère un flux d'air orienté au moins essentiellement vers le haut à travers l'échangeur de chaleur supplémentaire (42, 62).

3. Véhicule selon la revendication 1 ou 2, **caractérisé en ce que** le capot (16) présente notamment dans une région supérieure des ouvertures (24, 26, 28), à travers lesquelles le flux d'air généré par la soufflante peut sortir après avoir parcouru le/les échangeur(s) de chaleur (42, 62).

4. Véhicule selon l'une quelconque ou plusieurs des revendications précédentes, **caractérisé en ce que** la/les soufflante(s) présente(nt) à chaque fois au moins un ventilateur (48, 70) et/ou **en ce que** l'une des soufflantes ou les soufflantes présente(nt) chacune plusieurs ventilateurs (48, 70).

5. Véhicule selon l'une quelconque ou plusieurs des revendications précédentes, **caractérisé en ce que** la/les soufflante(s) ou les ventilateurs (48, 70) peuvent être entraînés électriquement.

6. Véhicule selon l'une quelconque ou plusieurs des revendications précédentes, **caractérisé en ce que** le moteur à combustion interne (12) peut entraîner un générateur (100) pour produire de l'énergie électrique.

7. Véhicule selon l'une quelconque ou plusieurs des revendications précédentes, **caractérisé en ce que** le flux d'air sortant est orienté essentiellement à l'écart de la cabine (11).
